# EUROPÄISCHE PATENTSCHRIFT

(11) **EP 3 276 999 B1**
(45) Veröffentlichungstag und Bekanntmachung des Hinweises auf die Patenterteilung: **11.03.2020**
(21) Anmeldenummer: 16182108.7
(22) Anmeldetag: 29.07.2016
(51) Int. Cl.: H04W 8/20, H04W 8/18, H04W 12/06

(54) **KOMMUNIKATIONSGERÄT MIT ESIM SCHALTKREIS ZUM BEREITSTELLEN EINER ELEKTRONISCHEN SIM**
COMMUNICATION DEVICE WITH ESIM CIRCUIT FOR PROVISION OF AN ELECTRONIC SIM
APPAREIL DE COMMUNICATION COMPRENANT UN CIRCUIT DE COMMUTATION ESIM DESTINE A PREPARER UNE CARTE SIM ELECTRONIQUE

(43) Veröffentlichungstag der Anmeldung: 31.01.2018
(73) Patentinhaber: Deutsche Telekom AG, 53113 Bonn (DE)
(72) Erfinder: Sonntag, Dr. Thomas, 53343 Wachtberg (DE)
(74) Vertreter: Raible Deissler Lehmann Patentanwälte PartG mbB

(56) Entgegenhaltungen:
- EP-A1- 2 713 304
- US-A1- 2013 303 122
- US-A1- 2014 088 731
- "Authorization of Profile Manager Change and Profile Loading;SCPREQ(14)000053_Requirements_for_ Profile_Manager_Change_and_Profile_Loading ", ETSI DRAFT; SCPREQ(14)000053_REQUIREMENTS_FOR_PROFILE_ MANAGER_CHANGE_AND_PROFILE_LOADING, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. SCP, 29. März 2014 (2014-03-29), Seiten 1-6, XP014185015, [gefunden am 2014-03-29]
- Tim Aschermann: "Was ist ein Captcha? - CHIP", , 14 June 2014 (2014-06-14), XP055576923, Retrieved from the Internet: URL:https://web.archive.org/web/2014061405 3027/http://praxistipps.chip.de/was-ist-ei n-captcha_11883 [retrieved on 2019-04-03]

## Beschreibung

Die vorliegende Erfindung betrifft ein Kommunikationsgerät mit eSIM-Schaltkreis zum Bereitstellen einer elektronischen SIM (eSIM) und Zufallszahlengenerator zum Erzeugen einer persönlichen Identifikationsnummer (PIN) zum Freischalten der eSIM. Die Erfindung betrifft ferner ein Verfahren zum Bereitstellen einer PIN zum Freischalten einer eSIM.

Die effiziente Vergabe von persönlichen Identifikationsnummern (PINs) bei Nutzung einer elektronischen bzw. eingebetteten SIM ("Subscriber Identification Module" bzw. Teilnehmeridentitätsmodul) ist ein bisher ungelöstes Problem. PINs und auch PUKs ("Personal Unlocking Key" bzw. persönlicher Entsperrschlüssel) werden in der Regel bei der Produktion des Profils, d.h. Nutzerprofils generiert und in das Profil geschrieben. Beim sogenannten "Operator Push"-Verfahren beauftragt der Kunde den Operator bzw. Netzwerkbetreiber, ein Profil für eine EID (elektronische ID bzw. elektronische Identifikation) zum Download zur Verfügung zu stellen.

Der Operator leitet diesen Auftrag an den SMDP+ (Subscription Manager Data Preparation and Download)-Server weiter und überlässt es in der Regel dem SMDP+ Server ein spezifisches Profil auszuwählen. Lädt der Anwender bzw. Nutzer nun dieses Profil herunter, sind ihm die im Profil enthaltenen PINs und PUKs nicht bekannt.

Ist die PIN auf dem Profil aktiviert ("PIN enabled") hat damit der Anwender keinen Zugriff auf das Profil und damit auch nicht auf den Netzwerkdienst (z.B. Telefonie, Internet, etc.). Sicherlich kann der SMDP+ Server die PINs und PUKs an den Operator und dieser an den Anwender weiterleiten, z.B. per Post oder elektronisch (eMail, SMS). Beides ist aber unpraktikabel und nicht kundenfreundlich. Die Post ist zu langsam und der Anwender bzw. Kunde ist nicht ohne weiteres elektronisch erreichbar.

Aus Gründen der Praktikabilität werden die eSIMs durch einige Netzwerkbetreiber daher mit der PIN "0000" und/oder deaktivierter PIN ausgeliefert.

Ein Problem besteht darin, eine neue PIN für ein Profil zu wählen.

US 2014/0088731 A1 offenbart das kontrollierte Umschalten von eSIMs in einer UE. Es wird ein CAPTCHA im eSIM erzeugt und die Antwort des Benutzers wird überprüft.

US 2013/0303122 A1 offenbart die Bereitstellung personalisierter eSIM-Informationen (z.B. PIN, PUK) vom eSIM-Server an das eSIM/eUICC.

EP 2 713 304 A1 offenbart die PIN-Verarbeitung in einer UE. Ein sicheres Element (MSE) in der UE umgeht den UE-Prozessor, wenn eine vom Benutzer eingegebene PIN von einem Touchscreen auf eine SIM übertragen wird.

Es ist die Aufgabe der vorliegenden Erfindung, ein Konzept zu schaffen, um einen Nutzer eines Kommunikationsgeräts mit elektronischer SIM in die Lage zu versetzen, sein Kommunikationsgerät mit einer neuen PIN auszustatten.

Insbesondere ist es eine Aufgabe der vorliegenden Erfindung ein Konzept zur Nutzung eines solchen Kommunikationsgeräts mit neuer PIN in 5G-Netzwerken zu schaffen.

Diese Aufgabe wird durch die Merkmale der unabhängigen Ansprüche gelöst. Vorteilhafte Weiterbildungsformen sind Gegenstand der abhängigen Ansprüche.

Eine Grundidee der Erfindung liegt darin, die PIN durch einen eUICC (embedded or electronic Universal Integrated Circuit Card)-Schaltkreis des Kommunikationsgeräts selbst zu erzeugen und dem Benutzer anzeigen zu lassen. Dazu hat der eUICC-Schaltkreis einen PIN-Generator, beispielsweise einen Zufallszahlengenerator, und eine Schnittstelle, um das Display des UEs anzusteuern. Auf diese einfache Weise wird sichergestellt, dass die eSIM-PIN ausschließlich dem Benutzer bekannt ist. In einer Variante erzeugt ein Profil, getriggert durch User/eUICC, selbst die PIN. Dies ist sinnvoll, da die PINs ohnehin in dem Profil gespeichert werden. Außerdem ist die eSIM-PIN im eUICC gespeichert und kann bei Bedarf von dort ausgelesen werden. Dies kann mittels einer APP realisiert werden. Eine Übermittlung der eSIM-PIN an den Benutzer ist daher nicht notwendig. Außerdem entfällt die Problematik, die neue eSIM-PIN dem eUICC-Schaltkreis mitzuteilen, was die Sicherheit der PIN-Vergabe weiter erhöht.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet, Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur.

Gemäß einem ersten Aspekt betrifft die Erfindung ein Kommunikationsgerät, mit: einem Bildschirm; und einem eSIM-Schaltkreis zum Bereitstellen einer elektronischen SIM (eSIM), wobei der eSIM-Schaltkreis einen Zufallszahlengenerator aufweist, der ausgebildet ist, eine Zufallszahl zu erzeugen, wobei die erzeugte Zufallszahl eine persönliche Identifikationsnummer (PIN) zum Freischalten der elektronischen SIM ist, wobei der eSIM-Schaltkreis ferner eine Kommunikationsschnittstelle aufweist, welche ausgebildet ist, die erzeugte Zufallszahl an den Bildschirm zu übertragen; und wobei der Bildschirm ausgebildet ist, die Zufallszahl von der Kommunikationsschnittstelle zu empfangen und anzuzeigen. Das erfindungsgemäße Kommunikationsgerät umfasst ferner eine Benutzerschnittstelle zum Erfassen von Eingaben des Benutzers.

Ein solches Kommunikationsgerät mit elektronischer SIM ermöglicht es dem Nutzer, sich von dem eSIM-Schaltkreis auf einfache Weise eine neue PIN generieren zu lassen, die aufgrund der lokal begrenzten Anzeige auf dem Bildschirm nur ihm bekannt ist.

Gemäß einer Ausführungsform umfasst das Kommunikationsgerät eine Management-Schnittstelle zum Herunterladen eines Profils eines Benutzers der eSIM von einem SMDP-Server in den eSIM-Schaltkreis.

Dies bietet den Vorteil, dass der Benutzer sämtliche Daten und Anwendungen, z.B. Einstellungen für sein Kommunikationsgerät von seinem Netzbetreiber über den SMDP Server erhält. Damit verbessert sich Bedienungsfreundlichkeit und Flexibilität des Kommunikationsgeräts. So kann der Nutzer sein Kommunikationsgerät in verschiedenen Kommunikationsnetzen verschiedener Netzwerkbetreiber nutzen, wenn er das jeweilige Benutzerprofile jeweils von den Netzbetreibern durch Download erhält.

Gemäß einer Ausführungsform des Kommunikationsgeräts umfasst das Profil des Benutzers eine Datenstruktur mit Daten und Anwendungsprogrammen, die dem Benutzer auf der eSIM bereitgestellt werden, und einen Zugriff auf eine spezifische Netzwerkinfrastruktur ermöglichen.

Dies bietet den Vorteil, dass unterschiedlichste Anwendungsprogramme über die erzeugte PIN genutzt werden können, um auf verschiedene Dienste des Netzwerks zugreifen zu können oder um gewisse Netzwerkfunktionalitäten freischalten zu können. Dies gestattet eine erhöhte Flexibilität und Anwenderfreundlichkeit

Gemäß einer Ausführungsform des Kommunikationsgeräts ist der eSIM-Schaltkreis ausgebildet, die erzeugte Zufallszahl als PIN in das Profil des Benutzers zu schreiben und in dem Profil zu aktivieren.

Dies bietet den Vorteil, dass die PIN im Profil des Benutzers gespeichert ist und ihm somit Zugang zu verschiedenen Diensten und Anwendungen im Kommunikationsnetz gestattet, ohne dass der Nutzer die PIN jeweils neu eingeben muss. Der Nutzer muss sich die PIN nicht mehr merken, wenn sie im Profil gespeichert ist, was die Bedienungsfreundlichkeit erhöht. In einer Ausführungsform kann die PIN auch direkt in das Profil geschrieben werden, wo sie zur Authentifizierung und Autorisierung des Nutzers verwendet werden kann, ohne dass dem Nutzer die PIN angezeigt werden muss.

Gemäß einer Ausführungsform des Kommunikationsgeräts ist der eSIM-Schaltkreis ausgebildet, eine bereits in dem Profil vorhandene initiale PIN durch die von dem Zufallszahlengenerator erzeugte Zufallszahl zu ersetzen.

Dies bietet den Vorteil, dass für den Fall, dass der Benutzer seine PIN vergessen hat oder er die initiale PIN nicht kennt, er auf einfache Weise eine neue PIN erzeugen kann. Gemäß einer Ausführungsform des Kommunikationsgeräts ist der Zufallszahlengenerator in einem Anwendungsprogramm auf dem Profil des Benutzers implementiert.

Dies bietet den Vorteil, dass der Zufallszahlengenerator in Software implementiert sein kann. Damit kann die Art und Weise, wie er eine Zufallszahl erzeugt, beispielsweise mittels Variation der "Seed" bzw. eines initialen Registerwertes im Laufe der Zeit verändert werden. Damit erhöht sich die Sicherheit der Erzeugung der PIN.

Gemäß einer Ausführungsform des Kommunikationsgeräts ist die Benutzerschnittstelle ausgebildet, ansprechend auf eine vorbestimmte Eingabe das Anwendungsprogramm zu veranlassen, die Zufallszahl zu erzeugen und an den Bildschirm zu übertragen.

Dies bietet den Vorteil, dass der Benutzer auf einfache Weise die Erzeugung einer neuen PIN triggern kann.

Erfindungsgemäß umfasst das Kommunikationsgerät einen Prozessor, und die Benutzerschnittstelle ist ferner ausgebildet, eine Eingabe einer PIN zu erfassen; und der Prozessor ist ausgebildet, ansprechend auf die Erfassung der PIN durch die Benutzerschnittstelle die eingegebene PIN mit der durch den Zufallszahlengenerator erzeugten Zufallszahl zu vergleichen und bei Übereinstimmung ein Kommunikationsanwendungsprogramm zum Aufbau einer Kommunikationsverbindung über ein Kommunikationsnetz freizuschalten.

Dies bietet den Vorteil, dass das Kommunikationsgerät prüfen kann, ob der Benutzer berechtigt ist, eine Kommunikationsverbindung aufzubauen. Somit erhöht dies die Sicherheit vor Missbrauch.

Erfindungsgemäß umfasst der eSIM-Schaltkreis eine Hardware-Verschaltung, die ausgebildet ist, die durch den Zufallszahlengenerator erzeugte Zufallszahl unter Umgehung des Prozessors in einem verschlüsselten Bereich des eSIM-Schaltkreises abzulegen.

Dies steigert die Sicherheit gegen Schadsoftware wie Viren, Trojaner etc. welche einen Prozessor mit einem Betriebssystem benötigen, um sich im Kommunikationsgerät einnisten zu können um die PIN abzugreifen.

Gemäß einer Ausführungsform des Kommunikationsgeräts umfasst die Kommunikationsschnittstelle eine Hardware-Verschaltung, die ausgebildet ist, die durch den Zufallszahlengenerator erzeugte Zufallszahl unter Umgehung des Prozessors an den Bildschirm zu übertragen.

Dies steigert die Sicherheit gegen Schadsoftware wie Viren, Trojaner etc. weiche einen Prozessor mit einem Betriebssystem benötigen, um sich im Kommunikationsgerät einnisten zu können um die PIN abzugreifen. Auch wenn sich Schadsoftware auf dem Prozessor befindet, kann die PIN dem Nutzer angezeigt werden, ohne dass dies die Schadsoftware erfassen kann.

Gemäß einer Ausführungsform des Kommunikationsgeräts umfasst die Kommunikationsschnittstelle einen Nahfeldkommunikations- (NFC) Schaltkreis, der ausgebildet ist, die durch den Zufallszahlengenerator erzeugte Zufallszahl unter Umgehung des Prozessors an den Bildschirm zu übertragen.

Dies bietet den Vorteil, dass über die Nahfeldkommunikation innerhalb eines kleinen Bereichs von etwa 1 bis 2 cm zwischen Zufallszahlengenerator und Bildschirm schädliche Programme keine Handhabe haben, die erzeugte PIN abzuhören oder auf andere Weise zu detektieren.

Gemäß einer Ausführungsform des Kommunikationsgeräts ist der Prozessor ausgebildet, ansprechend auf das Freischalten des Kommunikationsanwendungsprogramms einen Kommunikationskanal über ein Netzwerk einer fünften Generation (5G) oder einer weiteren Generation aufzubauen.

Dies bietet den Vorteil, dass über die selbst erzeugte PIN der Nutzer berechtigt ist, in 5G Netzwerken zu kommunizieren.

Gemäß einer Ausführungsform des Kommunikationsgeräts ist der Prozessor ausgebildet, ansprechend auf das Freischalten des Kommunikationsanwendungsprogramms einen Slice des Netzwerks der fünften oder weiteren Generation zu konfigurieren.

Dies bietet den Vorteil, dass über die selbst erzeugte PIN der Nutzer berechtigt ist, Subnetzwerke bzw. Slices in 5G Netzwerken zu konfigurieren und freizuschalten. Der Nutzer kann sich damit sein eigenes Netzwerk aufbauen und konfigurieren.

Gemäß einer Ausführungsform des Kommunikationsgeräts ist der Prozessor ausgebildet, ansprechend auf das Freischalten des Kommunikationsanwendungsprogramms eine Anwendung des Netzwerks der fünften oder weiteren Generation freizuschalten.

Dies bietet den Vorteil, dass über die selbst erzeugte PIN der Nutzer berechtigt ist, Anwendungen, Dienste und Ressourcen in 5G Netzwerken zu freizuschalten. Der Nutzer kann sich damit seine eigenen Anwendungen im 5G Netzwerk erstellen.

Gemäß einem zweiten Aspekt betrifft die Erfindung ein Verfahren zum Bereitstellen einer persönlichen Identifikationsnummer (PIN) zum Freischalten einer elektronischen SIM (eSIM) eines Kommunikationsgeräts mit den im unabhängigen Anspruch 13 definierten Schritten.

Ein solches Verfahren zum Freischalten einer eSIM ermöglicht es dem Nutzer, sich von dem eSIM-Schaltkreis seines Kommunikationsgeräts auf einfache Weise eine neue PIN generieren zu lassen, die aufgrund der lokal begrenzten Anzeige auf dem Bildschirm nur ihm bekannt ist.

Weitere Ausführungsbeispiele werden Bezug nehmend auf die beiliegenden Zeichnungen erläutert. Es zeigen:
Fig. 1 eine schematische Darstellung eines Kommunikationsgeräts 110 mit eSIM-Schaltkreis 111 und Zufallszahlengenerator 112 gemäß einer beispielhaften ersten Ausführungsform;
Fig. 2a eine schematische Darstellung eines Kommunikationsgeräts 210a mit eSIM-Schaltkreis 211a und Zufallszahlengenerator 112 gemäß einer beispielhaften zweiten Ausführungsform;
Fig. 2b eine schematische Darstellung eines Kommunikationsgeräts 210b mit eSIM-Schaltkreis 211b und Zufallszahlengenerator 112 gemäß einer beispielhaften dritten Ausführungsform;
Fig. 3 eine schematische Darstellung eines Kommunikationssystems 300 mit eUICC 330 und SMDP Server 320 zum Bereitstellen eines personalisierten Profils 326 gemäß einer beispielhaften Ausführungsform;
Fig. 4 eine schematische Darstellung einer 5G Systemarchitektur 400;
Fig. 5 eine schematische Darstellung eines 5G-Kommunikationsnetzwerks mit mehreren Slices (Netzwerkscheiben) 500;
Fig. 6 eine schematische Darstellung eines 5G-Kommunikationsnetzwerkes 600 mit Kommunikationskanal 615 zur Kommunikation zwischen zwei mobilen Kommunikationsgeräten gemäß einer beispielhaften Ausführungsform; und
Fig. 7 eine schematische Darstellung eines Verfahrens 700 zum Bereitstellen einer persönlichen Identifikationsnummer (PIN) zum Freischalten einer elektronischen SIM (eSIM) eines Kommunikationsgeräts, gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

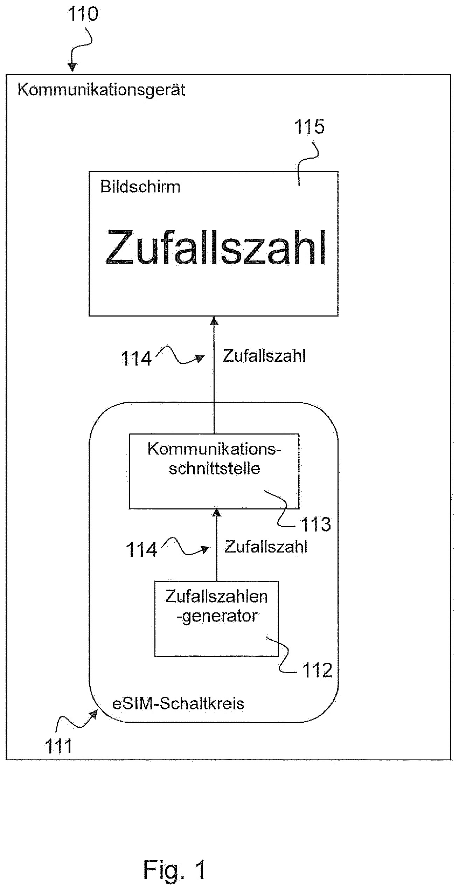

Fig. 1 zeigt eine schematische Darstellung eines Kommunikationsgeräts 110 mit eSIM-Schaltkreis 111 und Zufallszahlengenerator 112 gemäß einer beispielhaften ersten Ausführungsform.

Das Kommunikationsgerät 110 umfasst einen Bildschirm 115 und einen eSIM-Schaltkreis 111 zum Bereitstellen einer elektronischen SIM (eSIM). Der eSIM-Schaltkreis 111 weist einen Zufallszahlengenerator 112 auf, der eine Zufallszahl 114 erzeugt. Die erzeugte Zufallszahl 114 dient dabei als persönliche Identifikationsnummer (PIN) zum Freischalten der elektronischen SIM. Der eSIM-Schaltkreis 111 umfasst ferner eine Kommunikationsschnittstelle 113, mit welcher die erzeugte Zufallszahl 114 an den Bildschirm 115 übertragen wird. Der Bildschirm 115 empfängt die Zufallszahl 114 von der Kommunikationsschnittstelle 113 und zeigt die Zufallszahl 114 an. Damit kann der eSIM-Schaltkreis 111 sich eine PIN selbst erzeugen und diese über den Bildschirm dem Nutzer anzeigen.

Der eSIM-Schaltkreis 111 kann die erzeugte Zufallszahl 114 als PIN in ein Profil des Benutzers schreiben und sie in dem Profil aktivieren. Der eSIM-Schaltkreis 111 kann eine bereits in dem Profil vorhandene initiale PIN durch die von dem Zufallszahlengenerator 112 erzeugte Zufallszahl ersetzen. Beispielsweise kann das Kommunikationsgerät 110 über eine Benutzerschnittstelle Eingaben des Benutzers erfassen und ansprechend auf eine vorbestimmte Eingabe, z.B. auf einen bestimmten Steuerbefehl des Benutzers den Zufallszahlengenerator 112 veranlassen, die Zufallszahl 114 zu erzeugen und an den Bildschirm 115 zu übertragen. Die Benutzerschnittstelle kann beispielsweise eine Tastatur sein zum Erfassen von Eingaben des Benutzers oder ein Mikrofon zur Erfassung von akustischen Kommandos des Benutzers oder ein optischer Sensor zum Einscannen von optischen Anweisungen des Benutzers.

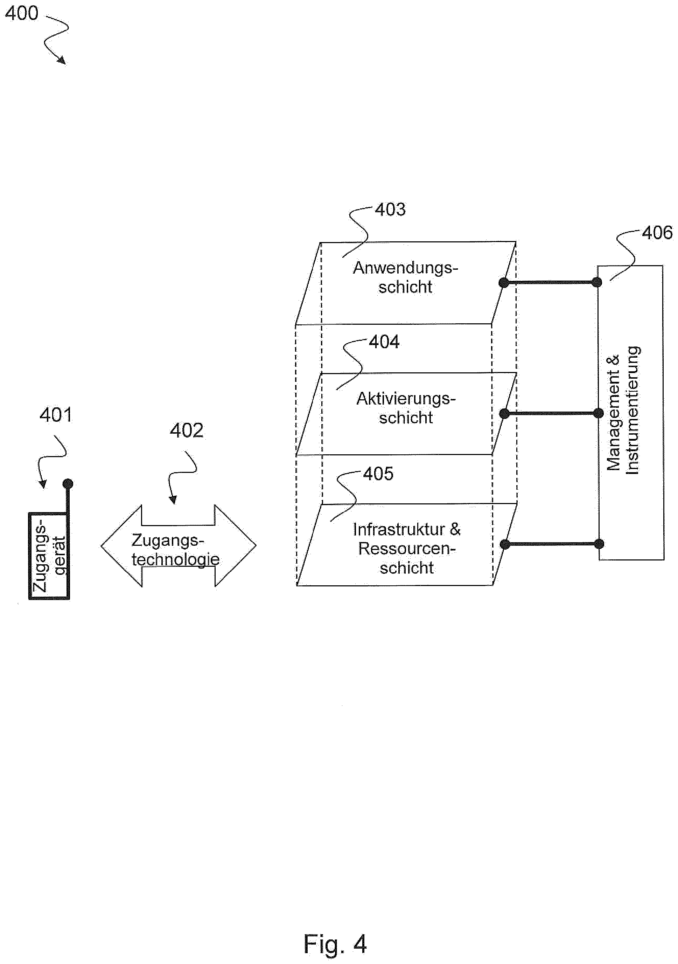

Über die Benutzerschnittstelle kann ferner eine Eingabe einer PIN durch den Benutzer erfasst werden. Das Kommunikationsgerät 110 kann dann die eingegebene PIN mit der durch den Zufallszahlengenerator 112 erzeugten Zufallszahl 114, d.h. der SIM-PIN vergleichen und bei Übereinstimmung eine Kommunikationsverbindung über ein Kommunikationsnetz initiieren und freischalten. Beispielsweise kann ein Kommunikationskanal über ein Netzwerk einer fünften Generation (5G) oder einer weiteren Generation aufgebaut werden, ein Slice des 5G Netzwerks freigeschaltet werden und/oder eine Anwendung des 5G Netzwerks gestartet und freigeschaltet werden wie unten zu den Figuren 4, 5 und 6 näher beschrieben.

Der eSIM-Schaltkreis 111 bildet einen integrierten Schaltkreis der die IMSI ("International Mobile Subscriber Identity" bzw. Internationale Mobile Teilnehmer Identität) und die zugehörige Schlüsselinformation sicher speichert. Die Schlüsselinformation wird dazu genutzt, Benutzer des mobilen Kommunikationsgeräts zu identifizieren und zu authentifizieren. Die in dem eSIM-Schaltkreis 111 gespeicherte Schlüsselinformation kann Folgendes umfassen: eine einzigartige Seriennummer (ICCID, Integrated Circuit Card ID) mit bis zu 20 Zeichen, die IMSI mit MCC (Mobile Country Code), MNC (Mobile Network Code) und MSIN (Mobile Subscriber Identification Number), sicherheitsrelevante Authentifizierungs- und Verschlüsselungsinformationen wie z.B. den Authentifizierungsschlüssel, z.B. in Form eines 128bit einzigartigen Schlüssels für jede SIM, der auch auf dem Authentifizierungsserver (AuC) bzw. dem HSS (Home Subscription Server) gespeichert sein kann, temporäre Informationen in Bezug auf das lokale Netzwerk, beispielsweise LAI (Local Area ID) wie von dem lokalen Träger übermittelt, und eine Liste von Diensten und Anwendungen, zu denen der Benutzer Zugang hat, z.B. eine betreiberspezifische Notfallnummer, die Nummer des SMS (Short Message Service) Servers, den Namen des Dienstanbieters SPN (Service Provider Name), Dienstrufnummern (SDN, Service Dialing Numbers), Parameter zum Kostenprofil, Zusatzdienste (VAS, Value Added Services).

Ferner können auf dem eSIM-Schaltkreis 111 zwei Passwörter gespeichert sein, zum einen die PIN, die hier auch als SIM-PIN oder eSIM-PIN bezeichnet wird, welche für die übliche Nutzung gedacht ist und zum anderen einen persönlichen Entsperrcode (PUK, Personal Unblocking Code) zum Entsperren der PIN bzw. SIM-PIN oder eSIM-PIN.

Die Anwendungen können Anwendungsprogramme, sogenannte Apps, oder Dienste auf dem mobilen Kommunikationsgerät 110 bzw. Smartphone sein. Die Anwendungen können auch mit Slices 141, 142 eines 5G Kommunikationsnetzes gekoppelt sein, um dort spezifische Funktionalitäten zu aktivieren bzw. freizuschalten, wie unten zu den Figuren 4 bis 6 näher beschrieben.

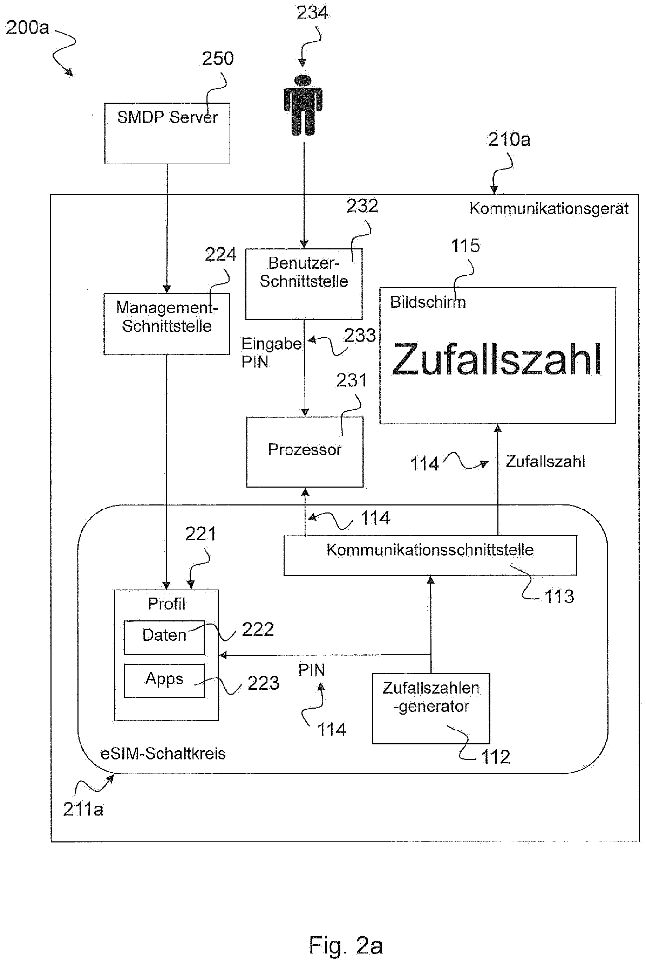

Fig. 2a zeigt eine schematische Darstellung eines Kommunikationsgeräts 210a mit eSIM-Schaltkreis 211a und Zufallszahlengenerator 112 gemäß einer beispielhaften zweiten Ausführungsform.

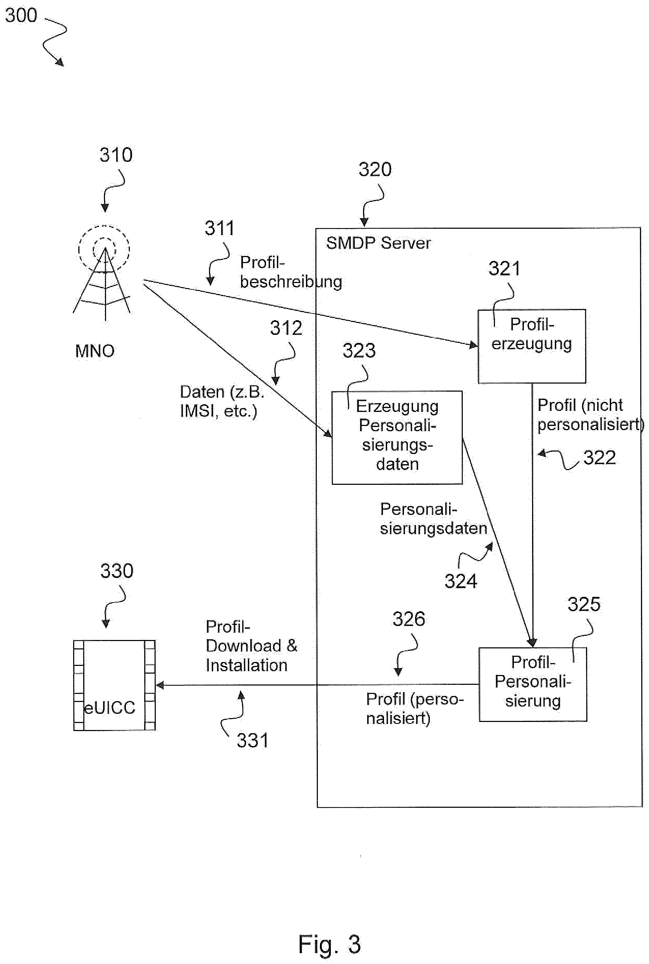

Das Kommunikationsgerät 210a entspricht dem zuvor in Fig. 1 beschriebenen Kommunikationsgerät 110, wobei das Kommunikationsgerät 210a ferner über eine Management-Schnittstelle 224 zum Empfang bzw. Download eines Benutzerprofils, im Folgenden auch einfachheitshalber als Profil 221 bezeichnet, von einem SMDP (Subscription Manager Data Preparation) Server 250 verfügt sowie über eine Benutzer-Schnittstelle 232 zum Erfassen von Eingaben des Benutzers 234. Ferner umfasst das Kommunikationsgerät 210a einen Prozessor 231, mit dem eine Kommunikation über ein Kommunikationsnetzwerk aufgebaut werden kann, und der weitere Steuerungsfunktionen wahrnimmt. Außerdem ist der eSIM-Schaltkreis 211a dafür ausgebildet, das von dem SMDP Server 250 geladene Profil 221 zu speichern. Der SMDP Server 250 kann beispielsweise gemäß der Darstellung des SMDP-Servers 320 in Figur 3 realisiert sein.

Die Benutzerschnittstelle 232 kann beispielsweise eine Tastatur sein zum Erfassen von Eingaben des Benutzers 234 oder ein Mikrofon zur Erfassung von akustischen Kommandos des Benutzers 234 oder ein optischer Sensor zum Einscannen von optischen Anweisungen des Benutzers 234.

Über die Management-Schnittstelle 224 kann das Profil 221 eines Benutzers 234 der eSIM von dem SMDP-Server 250 bzw. dem SMDP+ Server in den eSIM-Schaltkreis 211a geladen werden. Im Unterschied zum SMDP Server 250 umfasst der SMDP+ Server auch eine Download Funktionalität. In dieser Beschreibung werden die Begriffe SMDP Server 250 und SMDP+ Server jedoch synonym verwendet.

Das Profil 221 des Benutzers 234 umfasst eine Datenstruktur mit Daten 222 und Anwendungsprogrammen 223, die dem Benutzer 234 auf der eSIM bereitgestellt werden, und ihm einen Zugriff auf eine spezifische Netzwerkinfrastruktur, beispielsweise seines Heimnetzwerkes, bei dessen Netzwerkbetreiber bzw. mobilem Netzwerkoperator (MNO) er angemeldet ist, ermöglichen.

In einer Ausführungsform kann der eSIM-Schaltkreis 211a die erzeugte Zufallszahl 114 als PIN in das Profil 221 des Benutzers 234 schreiben und in dem Profil 221 aktivieren. Eine bereits in dem Profil 221 vorhandene initiale PIN kann von dem eSIM-Schaltkreis 211a durch die von dem Zufallszahlengenerator 112 erzeugte Zufallszahl 114 ersetzt werden.

Die Benutzerschnittstelle 232 dient zum Erfassen von Eingaben des Benutzers und sie kann ansprechend auf eine vorbestimmte Eingabe, z.B. einen Bestimmten Befehlscode, das Anwendungsprogramm 223 veranlassen, die Zufallszahl 114 zu erzeugen und an den Bildschirm 115 zu übertragen.

Die Benutzerschnittstelle 232 kann ferner eine Eingabe einer PIN durch den Benutzer 234 erfassen. Der Prozessor 231 kann dann ansprechend auf die Erfassung der PIN durch die Benutzerschnittstelle 232 die eingegebene PIN 233 mit der durch den Zufallszahlengenerator 112 erzeugten Zufallszahl 114 vergleichen und bei Übereinstimmung ein Kommunikationsanwendungsprogramm zum Aufbau einer Kommunikationsverbindung freischalten, beispielsweise eine Kommunikationsverbindung 615 über ein Kommunikationsnetz 400, 500, 600 wie unten zu den Figuren 4, 5 und 6 beschrieben.

Beispielsweise kann ein Kommunikationskanal 615 über ein Netzwerk 400, 500, 600 einer fünften Generation (5G) oder einer weiteren Generation aufgebaut werden, ein Slice 510b, 601 des 5G Netzwerks freigeschaltet werden und/oder eine Anwendung 611, 621 des 5G Netzwerks 400, 500, 600 gestartet und freigeschaltet werden wie unten zu den Figuren 4, 5 und 6 näher beschrieben.

Der eSIM-Schaltkreis 211a kann über eine Hardware-Verschaltung verfügen, die es dem Zufallszahlengenerator 112 ermöglicht, die von ihm erzeugte Zufallszahl 114 unter Umgehung des Prozessors 231 in einem verschlüsselten Bereich des eSIM-Schaltkreises 211a abzulegen. Dieser verschlüsselte Bereich kann sich auf dem eSIM-Schaltkreis 211a befinden und/oder kann ein Teil eines Speichers auf dem Kommunikationsgerät 210b sein, beispielsweise ein externes RAM. Die oben erwähnte Hardware-Verschaltung kann beispielsweise eine Verdrahtung sein, welche die von dem Zufallszahlengenerator 112 erzeugte Zufallszahl 114 direkt in den Speicher bzw. in dem eSIM-Schaltkreis 211a ablegt.

Beispielsweise kann hierzu ein DMA ("Direct Memory Access") Controller verwendet werden, der einen direkten Speicherzugriff auf das externe RAM bzw. den eSIM-Schaltkreis 211a realisiert, ohne dazu auf den Prozessor 231 zurückgreifen zu müssen. Damit kann die Sicherheit gegen Abhören der übergebenen Zufallszahl 114 erhöht werden, denn Viren, Trojaner oder Schadprogramme brauchen üblicherweise das Betriebssystem des Prozessors 231, um sich im Kommunikationsgerät einnisten zu können. Bei einer Übergabe der Zufallszahl 114 ohne Verwendung eines Betriebssystems kann kein schadhaftes Abgreifen der Zufallszahl bzw. PIN mehr erfolgen.

In einer alternativen Ausführungsform kann die oben beschriebene Hardware-Verschaltung als eine NFC ("Near Field Communication", Nahfeldkommunikation)-Schnittstelle zwischen Zufallszahlengenerator 112 und Speicher bzw. eSIM-Schaltkreis 211a realisiert werden. In einer solchen Implementierung ist die Strecke zwischen Zufallszahlengenerator 112 und Speicher bzw. eSIM-Schaltkreis 211a über eine Nahfeld-Funkkommunikation realisiert, die ebenfalls nicht auf das Betriebssystem des Prozessors 231 zurückgreifen muss. Wie bereits oben dargestellt, benötigen Viren, Schadprogramme und/oder Trojaner das Betriebssystem des Prozessors 231, um sich im Kommunikationsgerät 210a einnisten zu können. Damit kann diese Strecke abhörsicher implementiert werden, denn das Funkfeld zwischen Zufallszahlengenerator 112 und Speicher bzw. eSIM-Schaltkreis 211a breitet sich nur innerhalb eines Raumes von wenigen Zentimetern aus.

In einer weiteren alternativen Ausführungsform kann die oben beschriebene Hardware-Verschaltung als eine optische Schnittstelle, z.B. durch Leuchtdioden (LEDs) oder Laserdioden und Fotosensoren, zwischen Zufallszahlengenerator 112 und Speicher bzw. eSIM-Schaltkreis 211a realisiert werden. In einer solchen Implementierung ist die Strecke zwischen Zufallszahlengenerator 112 und Speicher bzw. eSIM-Schaltkreis 211a über eine optische Kommunikation realisiert, die ebenfalls nicht auf das Betriebssystem des Prozessors 231 zurückgreifen muss. Wie bereits oben dargestellt, benötigen Viren, Schadprogramme und/oder Trojaner das Betriebssystem des Prozessors 231, um sich im Kommunikationsgerät 210a einnisten zu können. Damit kann diese Strecke abhörsicher implementiert werden, denn das optische Feld zwischen Zufallszahlengenerator 112 und Speicher bzw. eSIM-Schaltkreis 211a breitet sich nur zwischen den beiden Komponenten, d.h. nur im Inneren des Kommunikationsgeräts 210a, aus.

Ferner kann die Kommunikationsschnittstelle 113 eine Hardware-Verschaltung umfassen, mittels derer der Zufallszahlengenerator 112 die von ihm erzeugte Zufallszahl 114 unter Umgehung des Prozessors 231 an den Bildschirm 115 übertragen kann. Auch diese Hardware-Verschaltung kann auf gleiche Weise realisiert werden wie die oben beschriebene Hardware-Verschaltung zwischen Zufallszahlengenerator 112 und Speicher bzw. eSIM-Schaltkreis 211a, d.h. beispielsweise über DMA, als NFC-Schaltung oder als optische Übertragung.

Die Anwendungsprogramme 223 auf dem Profil 221 können beispielsweise Applikationsprogramme, Dienste, Konfigurationen, Zugriff auf Speichermedien, Zugriff auf Server, Zugriff auf Kommunikationsgeräte, Anwendungen zur Netzwerkzugangssteuerung, insbesondere USIM, CSIM, ISIM; NFC Anwendungen umfassen.

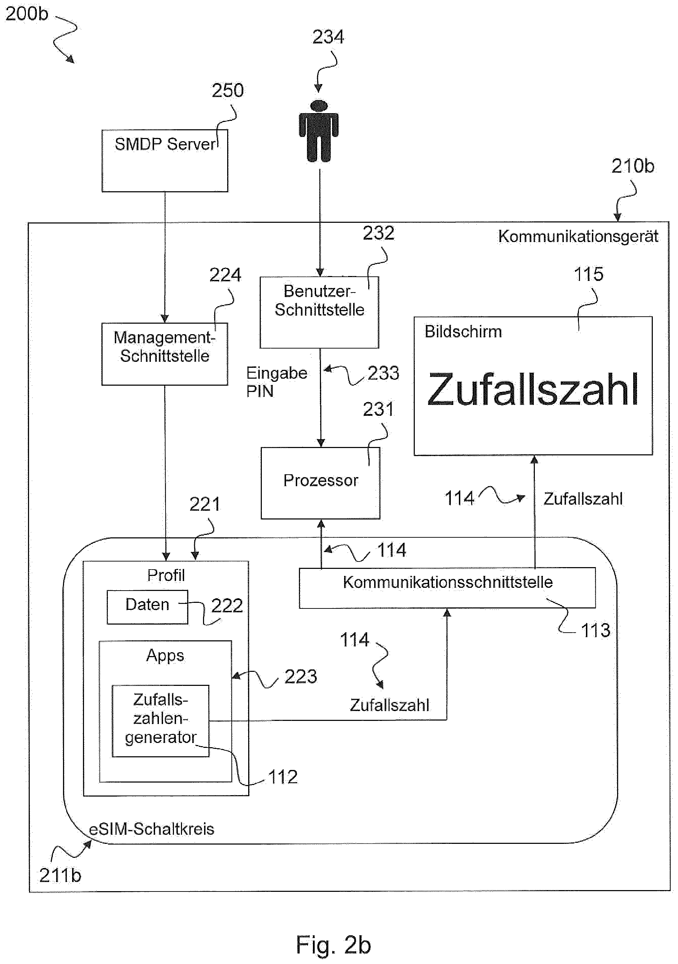

Fig. 2b zeigt eine schematische Darstellung eines Kommunikationsgeräts 210b mit eSIM-Schaltkreis 211b und Zufallszahlengenerator 112 gemäß einer beispielhaften dritten Ausführungsform.

Das Kommunikationsgerät 210b entspricht dem zuvor in Fig. 2a beschriebenen Kommunikationsgerät 210a, wobei der Zufallszahlengenerator 112 als eine Anwendung 223 bzw. in einer Anwendung der Mehrzahl von Anwendungen implementiert ist, die in dem Profil 221 untergebracht sind, das von dem SMDP Server 250 geladen wird. Damit braucht der Zufallszahlengenerator nicht als Hardwareschaltkreis auf dem eSIM-Schaltkreis implementiert sein, sondern kann als Software-Applikation über das Profil 221 geladen werden.

Fig. 3 zeigt eine schematische Darstellung eines Kommunikationssystems 300 mit eUICC 330 und SMDP Server 320 zum Bereitstellen eines personalisierten Profils 326 gemäß einer beispielhaften Ausführungsform.

Der SMDP ("Subscription Manager Data Preparation") Server 320, d.h. Einschreibeverwaltungs- und Datenvorbereitungs-Server 320 ist ein Server, der dem SIM-Modul bzw. der eUICC 330 ein personalisiertes Benutzerprofil 326 zur Verfügung stellt, das dieser über eine Schnittstelle 331 herunterladen und installieren kann. Dazu empfängt der SMDP Server 320 eine Profilbeschreibung 311 und persönliche Daten 312, wie beispielsweise eine IMSI (International Mobile Subscriber ID) von dem mobilen Netzwerkbetreiber (MNO) 310, bei dem der entsprechende Benutzer eingeschrieben bzw. angemeldet ist.

Der SMDP Server 320 umfasst ein Profilerzeugungsmodul 321, mit dem aus der Profilbeschreibung 311 ein (nicht personalisiertes) Profil des Benutzers generiert werden kann. Der SMDP Server 320 umfasst ferner ein Modul 323 zum Erzeugen von Personalisierungsdaten, mit dem aus den persönlichen Daten 312 Personalisierungsdaten 324 erzeugt werden können, beispielsweise Netzwerkzugangsschlüssel, Profilinstallationsschlüssel, Anmeldungs- und Zugangsdaten oder andere Daten. Der SMDP Server 320 umfasst ein Modul 325 zum Erzeugen eines personalisierten Profils 326 aus dem nicht personalisierten Profil 322 und den Personalisierungsdaten 324. Das personalisierte Profil 326 kann beispielsweise mit dem Profilinstallationsschlüssel des Ziel-eUICC 330 verschlüsselt werden. Das personalisierte Profil 326 kann dann der eUICC 330 zum Download und zur Installation in gesicherter Weise bereitgestellt werden, beispielsweise über einen SM-SR Prozess, d.h. "Subscription Manager Secure Routing" bzw. Einschreibemanagement und gesichertes Routing.

Der SMDP Server 320 kann hierbei die Authentifizierung und Autorisierung der eUICC Entität 330 verwalten. Dabei stellt der SMDP Server 320 zusammen mit dem SM-SR Prozess sicher, dass elektronische Daten, die an die eUICC 330 übertragen werden, entsprechend gesichert sind. Zur Gewährleistung der Sicherheit kann ein Zugriff des Benutzers auf sensible Daten, wie das personalisierte Profil 326 hierbei ausgeschlossen werden oder beschränkt werden auf ein absolut notwendiges Minimum. Der SMDP Server 320 kann z.B. jeden Zugriff auf sensible Daten mit einem Eintrag dokumentieren, der Datum, Uhrzeit, Aktivität und Person, die den Zugriff veranlasst hat, umfasst. Sensitive Daten, wie z.B. das personalisierte Profil 326 können dazu mit kryptografischen Schlüsseln unter Nutzung kryptografischer Algorithmen verschlüsselt werden, wobei jeder kryptografische Schlüsselverwaltungsprozess entsprechend dokumentiert werden kann. Der SMDP Server 320 kann ferner über eine umfassende Software bzw. Sicherheits-Patches zur Detektion und Abwehr der jüngst bekannten Virus und Schadsoftware verfügen.

Auf Anforderung des MNO 310 kann der SMDP Server 320 auch die Aktivierung bzw. Freischaltung eines Profils sowie das Löschen eines Profils auf dem eUICC 330 initiieren.

Ein Profil kann hierbei eine Kombination einer Datenstruktur mit Daten und Anwendungen umfassen, welche auf einer eUICC bereitgestellt oder verfügbar sein soll und den Zugriff auf eine spezifische mobile Netzwerkressource erlaubt, wenn es aktiviert ist.

Die Profilbeschreibung 311 kann sich aus Profil-Metadaten zusammensetzen, d.h. Informationen über ein Profil, wie z.B. MSISDN (Mobile Subscriber ISDN) oder Daten für den SM-SR Prozess zum Managen des eUICC 330.

Der SMDP Server kann gemäß einem SAS ("Security Accreditation Scheme" bzw. Sicherheitsakkreditierungsschema) Standard realisiert sein. Der SMDP Server kann beispielsweise gemäß dem GSMA SAS Standard realisiert sein, z.B. in der Version 1.0 vom 13. Oktober 2014.

Fig. 4 zeigt eine schematische Darstellung einer 5G Systemarchitektur 400. Die 5G Systemarchitektur 400 umfasst einen Bereich mit 5G Kommunikationsendgeräten 401, die über verschiedene Zugangstechnologien 402 mit einer mehrschichtigen Kommunikationsstruktur verbunden sind, welche eine Infrastruktur- & Ressourcenschicht 405, eine Aktivierungsschicht 404 und eine Anwendungsschicht 403 umfasst, die über eine Management- & Instrumentierungsebene 406 verwaltet werden.

Die Infrastruktur- & Ressourcenschicht 405 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 404, 403 und der Management- & Instrumentierungsebene 406 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 404 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 406 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 403 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 406 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Die Management- & Instrumentierungsebene 406 ist der Kontaktpunkt, um die geforderten Anwendungsfälle (Use Cases, auch Geschäftsmodelle) in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 405 ab. Die Management- & Instrumentierungsebene 406 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 406 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren.

Mit dem oben zu den Figuren 1, 2a und 2b beschriebenen (mobilen) Kommunikationsgerät 110, 210a, 210b, das als Zugangsgerät 401 genutzt wird, kann ein Kommunikationskanal über das Netzwerk 400 aufgebaut werden. Dazu kann der Prozessor 231 ansprechend auf die Erfassung der PIN durch die Benutzerschnittstelle 232 den Kommunikationskanal über das Netzwerk 400 aufbauen. Der Prozessor 231 kann beispielsweise ansprechend auf die Erfassung der PIN einen Slice der Anwendungsschicht 403 konfigurieren lassen, indem er eine Signalisierungsnachricht, welche die entsprechende Anforderung und Konfigurationsparameter dazu umfasst, an die Management & Instrumentierungsschicht 406 übermittelt. Der Prozessor 231 kann beispielsweise ansprechend auf die Erfassung der PIN über die besagte Signalisierungsnachricht an die Management & Instrumentierungsschicht 406 eine Anwendung aus der Anwendungsschicht 403 des 5G Netzwerks 400 freischalten lassen.

Das 5G Netzwerk 400 steigert die Leistungsfähigkeit der Kommunikation und realisiert insbesondere einen höheren Datendurchsatz, eine geringere Verzögerung, eine besonders hohe Zuverlässigkeit, eine weitaus höhere Verbindungsdichte und einen größeren Mobilitätsbereich, erhöht zum anderen aber auch die Flexibilität im Betrieb und stellt maßgeschneiderte Funktionen mit dem geringstmöglichen Einsatz von Mitteln bereit. Diese erhöhte Leistungsfähigkeit geht einher mit der Fähigkeit zur Steuerung stark heterogener Umgebungen und der Fähigkeit zur Sicherung von Vertrauen, Identität und Privatsphäre der Nutzer.

Die hier vorgestellten Geräte, Systeme und Verfahren sind dazu vorgesehen, die Leistungsfähigkeit der Kommunikation in Kommunikationsnetzen zu verbessern, insbesondere in 5G Kommunikationsnetzen mit mehreren Netzwerk Slices (Netzwerkscheiben), wie im Folgenden beschrieben.

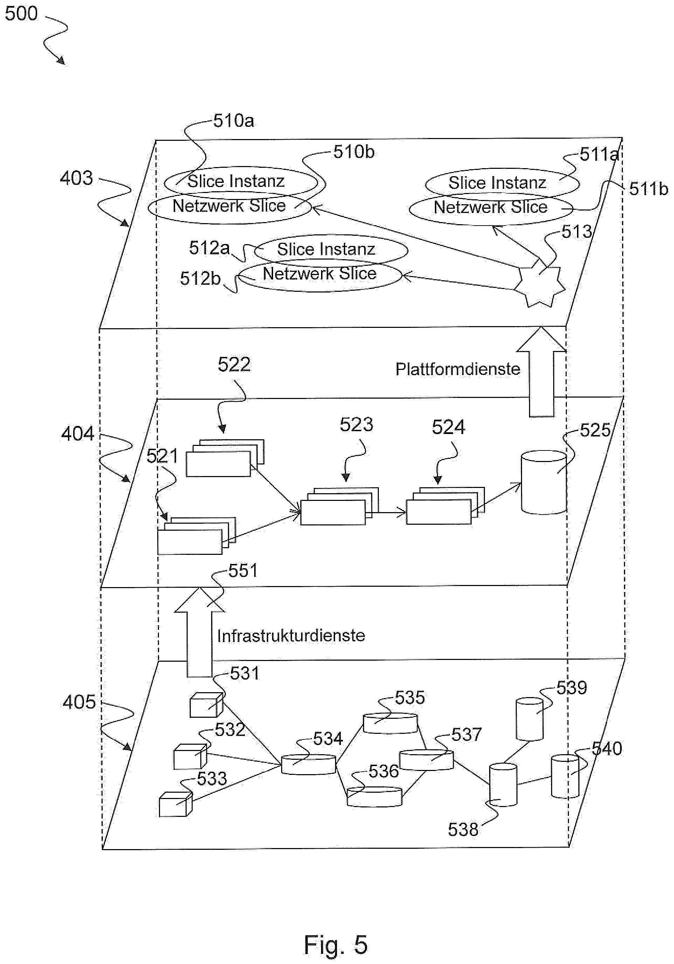

Fig. 5 zeigt eine schematische Darstellung eines 5G-Kommunikationsnetzwerks mit mehreren Slices (Netzwerkscheiben) 500. Das 5G-Kommunikationsnetzwerk 500 umfasst eine Infrastruktur- & Ressourcenschicht 405, eine Aktivierungsschicht 404 und eine Anwendungsschicht 403 wie oben zu Figur 4 beschrieben.

Die Infrastruktur- & Ressourcenschicht 405 umfasst alle physikalischen Aktiva, die einem Netzwerkbetreiber zugeordnet sind, d.h. Standorte, Kabel, Netzwerkknoten etc. Diese Schicht 405 bildet die Grundlage für alle Netzwerk Slices. Sie ist so generisch wie möglich aufgebaut ohne zu viele spezialisierte physikalische Einheiten. Die Infrastruktur- & Ressourcenschicht 405 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 405 basieren auf Hardware und Software bzw. Firmware, die für die jeweilige Operation benötigt wird und dabei als Infrastruktur- & Ressourcenschicht 405 den darüber liegenden Schichten als Ressourcenobjekte zu Verfügung gestellt wird. Beispielsweise umfassen Objekte der Infrastruktur- & Ressourcenschicht 405 virtuelle Maschinen, virtuelle Links bzw. Verbindungen und virtuelle Netzwerke, z.B. virtuelle Zugangsknoten 531, 532, 533, virtuelle Netzwerkknoten 534, 535, 536, 537 und virtuelle Computerknoten 538, 539, 540. Wie der Begriff "virtuell" bereits sagt, stellt die Infrastruktur- & Ressourcenschicht 405 die Objekte in der Form einer "Infrastruktur als Dienst" 551, d.h. in einer abstrahierenden, virtualisierten Form der nächsthöheren Schicht 404 zur Verfügung.

Die Aktivierungsschicht 404 ist oberhalb der Infrastruktur- & Ressourcenschicht 405 angeordnet. Sie nutzt die Objekte der Infrastruktur- & Ressourcenschicht 405 und fügt diesen zusätzliche Funktionalität in Form von (z.B. nicht-physikalischen) Software Objekten /VNFs hinzu um das Erzeugen von jeder Art von Netzwerk Slices zu ermöglichen und so eine Plattform als Dienst der nächsthöheren Schicht 403 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 404 verschiedene abstrahierte Objekte 521 mit anderen abstrahierten Objekten und mit virtuellen Netzwerkfunktionen 522 kombiniert werden, um kombinierte Objekte 523 zu bilden, die in aggregierte Objekten 524 überführt werden können und in einer Objektbibliothek 525 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 404, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 404 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 404 kann als eine Art von Netzwerk-Betriebssystem betrachtet werden komplementiert durch eine Netzwerkerzeugungsumgebung. Eine wesentliche Aufgabe der Aktivierungsschicht 404 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 403 umfasst alle erzeugten Netzwerk Slices 510b, 511b, 512b und bietet diese als "Netzwerk als Service" verschiedenen Netzwerknutzern, z.B. verschiedenen Kunden an. Das Konzept erlaubt die Wiederbenutzung von definierten Netzwerk Slices 510b, 511b, 512b für verschiedene Anwender, z.B. Kunden, beispielsweise als eine neue Netzwerk Slice Instanz 510a, 511a, 512a. D.h. ein Netzwerk Slice 510b, 511b, 512b, welcher beispielsweise einer Automotive Anwendung zugeordnet ist, kann auch für Anwendungen verschiedener anderer industrieller Anwendungen genutzt werden. Die Slices Instanzen 510a, 511a, 512a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Mit dem oben zu den Figuren 1, 2a und 2b beschriebenen (mobilen) Kommunikationsgerät 110, 210a, 210b, das als Zugangsgerät 401 genutzt wird, kann ein Kommunikationskanal über das Netzwerk 400 aufgebaut werden. Dazu kann der Prozessor 231 ansprechend auf die Erfassung der PIN durch die Benutzerschnittstelle 232 den Kommunikationskanal über das Netzwerk 400 aufbauen. Der Prozessor 231 kann beispielsweise ansprechend auf die Erfassung der PIN einen Slice der Anwendungsschicht 403 konfigurieren lassen, indem er eine Signalisierungsnachricht, welche die entsprechende Anforderung und Konfigurationsparameter dazu umfasst, an die Management & Instrumentierungsschicht 406 übermittelt. Der Prozessor 231 kann beispielsweise ansprechend auf die Erfassung der PIN über die besagte Signalisierungsnachricht an die Management & Instrumentierungsschicht 406 eine Anwendung aus der Anwendungsschicht 403 des 5G Netzwerks 400 freischalten lassen.

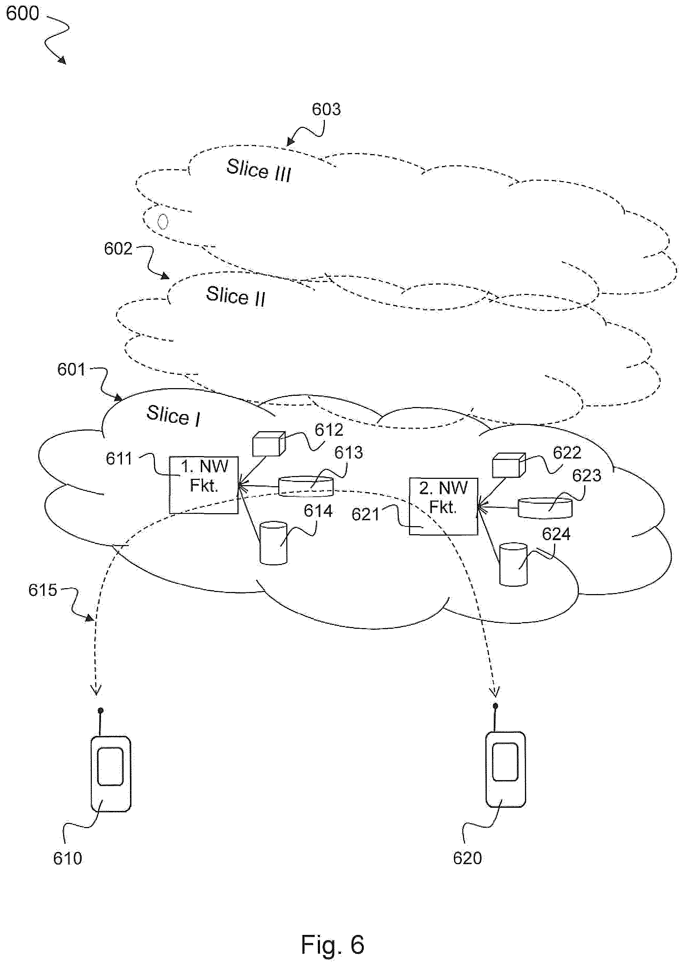

Fig. 6 zeigt eine schematische Darstellung eines 5G-Kommunikationsnetzwerkes 600 mit Kommunikationskanal 615 zur Kommunikation zwischen zwei mobilen Kommunikationsgeräten gemäß einer beispielhaften Ausführungsform.

Das Kommunikationsgerät 610 kann einen Kommunikationskanal 615 über das Netzwerk 600 aufbauen, beispielsweise zu einem zweiten Kommunikationsgerät 620. Das Kommunikationsgerät 610 kann dem oben zu den Figuren 1, 2a und 2b beschriebenen (mobilen) Kommunikationsgeräten 110, 210a, 210b entsprechen. Zur Initiierung des Kommunikationskanals 615 kann der Prozessor 231 ansprechend auf die Erfassung der PIN durch die Benutzerschnittstelle 232 den Kommunikationskanal 615 über das Netzwerk 600 aufbauen, beispielsweise über ein erstes Subnetz 601 bzw. Slice I des Kommunikationsnetzwerks 600. Der Prozessor 111 kann beispielsweise ansprechend auf die Erfassung der PIN durch die Benutzerschnittstelle 232 den Netzwerk-Slice 601 konfigurieren lassen, indem er eine Signalisierungsnachricht, welche die entsprechende Anforderung und Konfigurationsparameter dazu umfasst, an die in Figur 4 beschriebene Management & Instrumentierungsschicht 406 übermittelt. Diese kann beispielsweise eine erste Netzwerkfunktion 611 und eine zweite Netzwerkfunktion 621 im Slice 601 konfigurieren, welche dann die notwendigen Ressourcen 612, 613, 614, 622, 623, 624 zum Aufbau des Kommunikationskanals 615 allokiert. Der Prozessor 231 kann beispielsweise ansprechend auf die Erfassung der PIN durch die Benutzerschnittstelle 232 über die besagte Signalisierungsnachricht an die Management & Instrumentierungsschicht 406 eine Anwendung aus der Anwendungsschicht 403 des 5G Netzwerks 400 freischalten lassen, z.B. den Netzwerk-Slice 601 oder die Netzwerkfunktionen 611, 621 zum Allokieren der erforderlichen Netzwerkressourcen 612, 613, 614, 622, 623, 624 zum Aufbau des Kommunikationskanals 615.

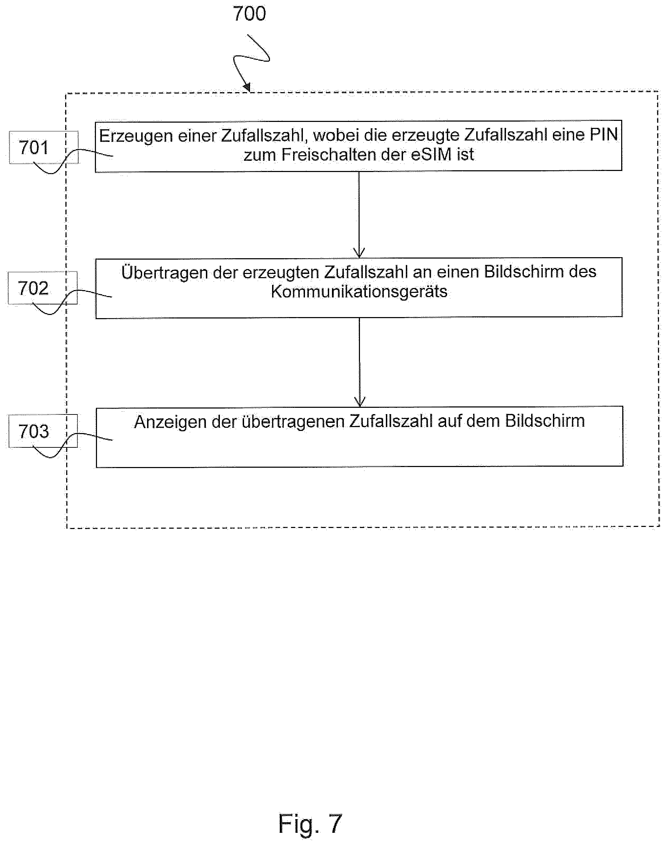

Fig. 7 zeigt eine schematische Darstellung eines Verfahrens 700 zum Bereitstellen einer persönlichen Identifikationsnummer (PIN) zum Freischalten einer elektronischen SIM (eSIM) eines Kommunikationsgeräts, gemäß einer beispielhaften Ausführungsform.

Das Verfahren umfasst einen ersten Schritt 701: Erzeugen 701 einer Zufallszahl durch einen eSIM-Schaltkreis des Kommunikationsgeräts, beispielsweise einen eSIM-Schaltkreis 111, 211a, 211b, wie oben zu den Figuren 1, 2a und 2b beschrieben, wobei die erzeugte Zufallszahl eine persönliche Identifikationsnummer (PIN) zum Freischalten der elektronischen SIM ist.

Das Verfahren 700 umfasst einen zweiten Schritt 702: Übertragen 702 der erzeugten Zufallszahl an einen Bildschirm des Kommunikationsgeräts, beispielsweise mittels eines Zufallszahlengenerators 112, wie oben zu den Figuren 1, 2a und 2b beschrieben.

Das Verfahren 700 umfasst einen dritten Schritt 703: Anzeigen der übertragenen Zufallszahl auf dem Bildschirm, beispielsweise einem Bildschirm 115, wie oben zu den Figuren 1, 2a und 2b beschrieben.

Das Verfahren 700 kann beispielsweise in einem Kommunikationsnetzwerk oder Kommunikationssystem 200, 300, 400, 500, 600, wie in den Figuren 2 bis 6 beschrieben, eingesetzt werden, insbesondere auf einem mobilen Kommunikationsgerät 110, 210a, 210b, 401, 610, 620 wie zu den Figuren 1, 2a, 2b, 4 und 6 beschrieben oder auf einer eUICC 330 wie oben zu Figur 3 beschrieben. Das Verfahren kann ferner weitere Schritte umfassen, mit denen die oben zu den Figuren 1 bis 6 beschriebenen Funktionalitäten auf den genannten Geräten realisiert werden können.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 7 beschriebene Verfahren 700 oder die zu den Figuren 1 bis 6 beschriebenen Vorgänge ausgeführt werden können, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 700 auszuführen oder die Netzkomponenten der in den Figuren 2 bis 6 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 2 bis 6 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 110:: Kommunikationsgerät, insbesondere mobiles Kommunikationsgerät gemäß einer ersten Ausführungsform
- 111:: e-SIM Schaltkreis
- 112:: Zufallszahlengenerator
- 113:: Kommunikations-Schnittstelle
- 114:: Zufallszahl bzw. erzeugte PIN
- 115:: Bildschirm

- 200a:: Kommunikationssystem bzw. Kommunikationsnetzwerk
- 210a:: Kommunikationsgerät, insbesondere mobiles Kommunikationsgerät gemäß einer zweiten Ausführungsform
- 211 a:: e-SIM Schaltkreis
- 221:: Profil eines Benutzers
- 222:: Daten auf dem Profil
- 223:: Anwendungsprogramme bzw. Apps auf dem Profil
- 224:: Management-Schnittstelle
- 231:: Prozessor
- 232:: Benutzer-Schnittstelle
- 233:: eingegebene PIN bzw. Eingabe-PIN
- 250:: SMDP Server

- 200b:: Kommunikationssystem bzw. Kommunikationsnetzwerk
- 210b:: Kommunikationsgerät, insbesondere mobiles Kommunikationsgerät gemäß einer dritten Ausführungsform
- 211b:: e-SIM Schaltkreis

- 300:: Kommunikationssystems
- 310:: MNO bzw. Mobilfunknetzwerk-Betreiber
- 311:: Profilbeschreibung
- 312:: persönliche Daten, z.B. IMSI etc.
- 320:: SMDP Server
- 321:: Profilerzeugung
- 322:: Profil, nicht personalisiert
- 323:: Erzeugung Personalisierungsdaten
- 324:: Personalisierungsdaten
- 325:: Profil-Personalisierung
- 326:: personalisiertes Profil
- 330:: eUICC
- 331:: Profil Download und Installation

- 400:: 5G Systemarchitektur
- 401:: Zugangsgerät, Kommunikationsendgerät, UE
- 402:: Zugangstechnologie
- 403:: Anwendungsschicht
- 404:: Aktivierungsschicht
- 405:: Infrastruktur & Ressourcenschicht
- 406:: Management & Instrumentierungsschicht

- 500:: 5G Kommunikationsnetzwerk mit mehreren Slices
- 510a:: erste Slice Instanz
- 510b:: erste Netzwerk Slice
- 511a:: zweite Slice Instanz
- 511b:: zweite Netzwerk Slice
- 512a:: dritte Slice Instanz
- 512b:: dritte Netzwerk Slice
- 513:: Slice Komposition
- 521:: abstrahierte Objekte
- 522:: virtuelle Netzwerkfunktionen
- 523:: kombinierte Objekte
- 524:: aggregierte Objekte
- 525:: Objektbibliothek
- 531:: Zugangsknoten
- 532:: Zugangsknoten
- 533:: Zugangsknoten
- 534:: virtueller Netzwerkknoten
- 535:: virtueller Netzwerkknoten
- 536:: virtueller Netzwerkknoten
- 537:: virtueller Netzwerkknoten
- 538:: Computerknoten
- 539:: Computerknoten
- 540:: Computerknoten
- 551:: Infrastrukturdienste

- 600:: Kommunikationsnetzwerk bzw. Kommunikationssystem
- 601:: erstes Subnetzwerk bzw. Slice I oder einfach Subnetzwerk
- 602:: zweites Subnetzwerk bzw. Slice II
- 603:: drittes Subnetzwerk bzw. Slice III
- 610:: erstes mobiles Kommunikationsgerät,
- 611:: erste Kommunikationsentität mit erster Netzwerkfunktion
- 612, 613, 614:: Netzwerkkomponenten, die der ersten Kommunikationsentität mittels der ersten Netzwerkfunktion zugewiesen werden
- 620:: zweites mobiles Kommunikationsgerät,
- 621:: zweite Kommunikationsentität mit zweiter Netzwerkfunktion
- 622, 623, 624:: Netzwerkkomponenten, die der zweiten Kommunikationsentität mittels der zweiten Netzwerkfunktion zugewiesen werden

- 700:: Verfahren zum Bereitstellen einer PIN
- 701:: erster Schritt: Erzeugen einer Zufallszahl
- 702:: zweiter Schritt: Übertragen der Zufallszahl an einen Bildschirm
- 703:: dritter Schritt: Anzeigen der Zufallszahl auf dem Bildschirm

## Patentansprüche

1. Kommunikationsgerät (110, 210a, 210b), mit:
einem Bildschirm (115);
einem eSIM-Schaltkreis (111) zum Bereitstellen einer elektronischen SIM (eSIM),
wobei der eSIM-Schaltkreis (111) ferner eine Kommunikationsschnittstelle (113) aufweist, welche ausgebildet ist, eine Zufallszahl (114) an den Bildschirm (115) zu übertragen; und
wobei der Bildschirm (115) ausgebildet ist, die Zufallszahl (114) von der Kommunikationsschnittstelle (113) zu empfangen und anzuzeigen,
einer Benutzerschnittstelle (232) zum Erfassen von Eingaben eines Benutzers (234), wobei die Benutzerschnittstelle (232) ausgebildet ist, eine Eingabe einer PIN zu erfassen,
einem Prozessor (231), der ausgebildet ist, ansprechend auf die Erfassung der PIN durch die Benutzerschnittstelle (232) die eingegebene PIN (233) mit der durch einen Zufallszahlengenerator (112) erzeugten Zufallszahl (114) zu vergleichen und bei Übereinstimmung ein Kommunikationsanwendungsprogramm zum Aufbau einer Kommunikationsverbindung (615) über ein Kommunikationsnetz (400, 500, 600) freizuschalten,
**dadurch gekennzeichnet, dass**
der eSIM-Schaltkreis (111) den Zufallszahlengenerator (112) aufweist, der ausgebildet ist, die Zufallszahl (114) zu erzeugen, wobei die erzeugte Zufallszahl (114) eine persönliche Identifikationsnummer (PIN) zum Freischalten der elektronischen SIM ist
der eSIM-Schaltkreis (211a, 211b) eine Hardware-Verschaltung umfasst, die ausgebildet ist, die durch den Zufallszahlengenerator (112) erzeugte Zufallszahl (114) unter Umgehung des Prozessors (231) in einem verschlüsselten Bereich des eSIM-Schaltkreises (211a, 211b) abzulegen.

2. Kommunikationsgerät (210a, 210b) nach Anspruch 1, mit:
einer Management-Schnittstelle (224) zum Herunterladen eines Profils (221) eines Benutzers (234) der eSIM von einem SMDP-Server (250) in den eSIM-Schaltkreis (211a, 211b).

3. Kommunikationsgerät (210a, 210b) nach Anspruch 2,
wobei das Profil (221) des Benutzers (234) eine Datenstruktur mit Daten (222) und Anwendungsprogrammen (223) umfasst, die dem Benutzer (234) auf der eSIM bereitgestellt werden, und einen Zugriff auf eine spezifische Netzwerkinfrastruktur ermöglichen.

4. Kommunikationsgerät (210a, 210b) nach Anspruch 3,
wobei der eSIM-Schaltkreis (211a, 211b) ausgebildet ist, die erzeugte Zufallszahl (114) als PIN in das Profil (221) des Benutzers (234) zu schreiben und in dem Profil (221) zu aktivieren.

5. Kommunikationsgerät (210a, 210b) nach Anspruch 3 oder 4,
wobei der eSIM-Schaltkreis (211a, 211b) ausgebildet ist, eine bereits in dem Profil (221) vorhandene initiale PIN durch die von dem Zufallszahlengenerator (112) erzeugte Zufallszahl (114) zu ersetzen.

6. Kommunikationsgerät (210b) nach einem der Ansprüche 3 bis 5,
wobei der Zufallszahlengenerator (112) in einem Anwendungsprogramm (223) auf dem Profil (221) des Benutzers (234) implementiert ist.

7. Kommunikationsgerät (210a, 210b) nach einem der vorstehenden Ansprüche, wobei die Benutzerschnittstelle (232) ausgebildet ist, ansprechend auf eine vorbestimmte Eingabe das Anwendungsprogramm (223) zu veranlassen, die Zufallszahl (114) zu erzeugen und an den Bildschirm (115) zu übertragen.

8. Kommunikationsgerät (210a, 210b) nach einem der voranstehenden Ansprüche,
wobei die Kommunikationsschnittstelle (113) eine Hardware-Verschaltung umfasst, die ausgebildet ist, die durch den Zufallszahlengenerator (112) erzeugte Zufallszahl (114) unter Umgehung des Prozessors (231) an den Bildschirm (115) zu übertragen.

9. Kommunikationsgerät (210a, 210b) nach einem der voranstehenden Ansprüche,
wobei die Kommunikationsschnittstelle (113) einen Nahfeldkommunikations- (NFC) Schaltkreis umfasst, der ausgebildet ist, die durch den Zufallszahlengenerator (112) erzeugte Zufallszahl (114) unter Umgehung des Prozessors (231) an den Bildschirm (115) zu übertragen.

10. Kommunikationsgerät (210a, 210b) nach einem der voranstehenden Ansprüche,
wobei der Prozessor (231) ausgebildet ist, ansprechend auf das Freischalten des Kommunikationsanwendungsprogramms einen Kommunikationskanal (615) über ein Netzwerk (400, 500, 600) einer fünften Generation (5G) oder einer weiteren Generation aufzubauen.

11. Kommunikationsgerät (210a, 210b) nach Anspruch 10,
wobei der Prozessor (231) ausgebildet ist, ansprechend auf das Freischalten des Kommunikationsanwendungsprogramms einen Slice (510b, 601) des Netzwerks (400, 500, 600) der fünften oder weiteren Generation zu konfigurieren.

12. Kommunikationsgerät (210a, 210b) nach Anspruch 10 oder 11,
wobei der Prozessor (231) ausgebildet ist, ansprechend auf das Freischalten des Kommunikationsanwendungsprogramms eine Anwendung (611, 621) des Netzwerks (400, 500, 600) der fünften oder weiteren Generation freizuschalten.

13. Verfahren (700) zum Bereitstellen einer persönlichen Identifikationsnummer (PIN) zum Freischalten einer durch einen eSIM-Schaltkreis eines Kommunikationsgeräts bereitgestellten elektronischen SIM (eSIM) des Kommunikationsgeräts, mit folgenden Schritten:
Übertragen (702) einer Zufallszahl an einen Bildschirm des Kommunikationsgeräts; und
Anzeigen (703) der übertragenen Zufallszahl auf dem Bildschirm,
Erfassen einer Eingabe einer PIN mittels einer Benutzerschnittstelle des Kommunikationsgeräts,
Vergleichen der eingegebenen PIN mit der Zufallszahl und bei Übereinstimmung Freischalten einer Kommunikationsverbindung über ein Kommunikationsnetzwerk mittels eines Prozessors des Kommunikationsgeräts,
**gekennzeichnet durch**:
Erzeugen (701) der Zufallszahl durch den eSIM-Schaltkreis des Kommunikationsgeräts, wobei die erzeugte Zufallszahl eine persönliche Identifikationsnummer (PIN) zum Freischalten der elektronischen SIM ist und durch einen Zufallszahlengenerator des eSIM-Schaltkreises erzeugt wird,
Ablegen der durch den Zufallszahlengenerator erzeugten Zufallszahl unter Umgehung des Prozessors in einem verschlüsselten Bereich des eSIM-Schaltkreises mittels einer von dem eSIM-Schaltkreis umfassten Hardware-Verschaltung.

## Claims

1. A communication device (110, 210a, 210b), with:
a screen (115);
an eSIM circuit (111) for provision of an electronic SIM (eSIM),
wherein the eSIM circuit (111) further has a communication interface (113) that is designed to transmit a random number (114) to the screen (115); and
wherein the screen (115) is designed to receive and display the random number (114) from the communication interface (113),
a user interface (232) for detecting inputs of a user (234), wherein the user interface (232) is designed to detect an input of a PIN,
a processor (231) that is designed, in response to the detection of the PIN by the user interface (232), to compare the input PIN (233) to the random number (114) generated by a random number generator (112) and in the event they match, to unlock a communication application program for establishing a communication connection (615) via a communication network (400, 500, 600),
**characterized in that**
the eSIM circuit (111) has the random number generator (112) that is designed to generate the random number (114), where the generated random number (114) is a personal identification number (PIN) for unlocking the electronic SIM
the eSIM circuit (211a, 211b) comprises a hardware wiring that is designed to store the random number (114) generated by the random number generator (112) in an encrypted region of the eSIM circuit (211 a, 211 b) in a manner so as to bypass the processor (231).

2. The communication device (210a, 210b) according to Claim 1, with:
a management interface (224) for downloading a profile (221) of a user (234) of the eSIM from an SMDP server (250) into the eSIM circuit (211 a, 211 b).

3. The communication device (210a, 210b) according to Claim 2,
wherein the profile (221) of the user (234) comprises a data structure with data (222) and application programs (223) that are provided to the user (234) on the eSIM and enable an access to a specific network infrastructure.

4. The communication device (210a, 210b) according to Claim 3,
wherein the eSIM circuit (211a, 211b) is designed to write the generated random number (114) into the profile (221) of the user (234) as the PIN and to activate it in the profile (221).

5. A communication device (210a, 210b) according to Claim 3 or 4,
wherein the eSIM circuit (211a, 211b) is designed to replace an existing initial PIN already in the profile (221) with the random number (114) generated by the random number generator (112).

6. A communication device (210b) according to any of Claims 3 to 5,
wherein the random number generator (112) is implemented within an application program (223) on the profile (221) of the user (234).

7. A communication device (210a, 210b) according to any of the preceding claims, wherein the user interface (232) is designed, in response to a preset input, to trigger the application program (223) to generate the random number (114) and transmit it to the screen (115).

8. A communication device (210a, 210b) according to any of the preceding claims,
wherein the communication interface (113) comprises a hardware wiring that is designed to transmit the random number (114) generated by the random number generator (112) to the screen (115) in a manner so as to bypass the processor (231).

9. A communication device (210a, 210b) according to any of the preceding claims,
wherein the communication interface (113) comprises a near-field communication (NFC) circuit that is designed to transmit the random number (114) generated by the random number generator (112) to the screen (115) in a manner so as to bypass the processor (231).

10. A communication device (210a, 210b) according to any of the preceding claims,
wherein the processor (231) is designed, in response to the unlocking of the communication application program, to establish a communication channel (615) via a network (400, 500, 600) of a fifth-generation (5G) or later generation.

11. The communication device (210a, 210b) according to Claim 10,
wherein the processor (231) is designed, in response to the unlocking of the communication application program, to configure a slice (510b, 601) of the network (400, 500, 600) of the fifth or later generation.

12. A communication device (210a, 210b) according to Claim 10 or 11,
wherein the processor (231) is designed, in response to the unlocking of the communication application program, to unlock an application (611, 621) of the network (400, 500, 600) of the fifth or later generation.

13. A method (700) for providing a personal information number (PIN) for unlocking an electronic SIM (eSIM) of a communication device provided by an eSIM circuit of the communication device, with the following steps:
transmitting (702) a random number to a screen of the communication device; and
displaying (703) the transmitted random number on the screen,
detecting an input of a PIN by means of a user interface of the communication device,
comparing the input PIN to the random number and, in the event they match, unlocking a communication connection via a communication network by means of a processor of the communication device
**characterized by**:
generating (701) the random number with the eSIM circuit of the communication device, wherein the generated random number is a personal identification number (PIN) for unlocking the electronic SIM and is generated by a random number generator of the eSIM circuit,
storing the random number generated by the random number generator in an encrypted region of the eSIM circuit, in a manner so as to bypass the processor, by means of a hardware wiring comprised by the eSIM circuit.

## Revendications

1. Appareil de communication (110, 210a, 210b) avec
un écran (115) ;
un circuit de commutation eSIM (111) pour fournir une carte SIM électronique (eSIM),
ledit circuit de commutation eSIM (111) comportant également une interface de communication (113) conçue pour transmettre un nombre aléatoire (114) à l'écran (115) ; et
ledit écran (115) étant conçu pour recevoir et afficher le nombre aléatoire (114) venant de l'interface de communication (113),
une interface utilisateur (232) destinée à enregistrer des saisies d'un utilisateur (234), ladite interface utilisateur (232) étant conçue pour enregistrer une saisie d'un NIP,
un processeur (231) conçu pour comparer, en réponse à la saisie du NIP par l'interface utilisateur (232), le NIP (233) saisi avec le nombre aléatoire (114) généré par un générateur de nombres aléatoires (112), et déverrouiller, en cas de concordance, un programme applicatif de communication destiné à établir une liaison de communication (615) via un réseau de communication (400, 500, 600),
**caractérisé en ce que**
le circuit de commutation eSIM (111) comporte le générateur de nombres aléatoires (112) conçu pour générer le nombre aléatoire (114), sachant que le nombre aléatoire (114) généré est un numéro d'identification personnel (NIP) destiné à déverrouiller la carte SIM électronique,
le circuit de commutation eSIM (211a, 211b) comprend une connexion matérielle conçue pour stocker le nombre aléatoire (114) généré par le générateur de nombres aléatoires (112), sans passer par le processeur (231), dans une zone cryptée du circuit de commutation eSIM (211 a, 211 b).

2. Appareil de communication (210a, 210b) selon la revendication 1, comprenant
une interface de gestion (224) destinée à télécharger un profil (221) d'un utilisateur (234) de la carte SIM électronique (eSIM) à partir d'un serveur SMDP (250) dans le circuit de commutation eSIM (211 a, 211 b).

3. Appareil de communication (210a, 210b) selon la revendication 2,
dans lequel le profil (221) de l'utilisateur (234) comprend une structure de données avec des données (222) et des programmes applicatifs (223), qui sont fournis à l'utilisateur (234) sur la carte SIM électronique (eSIM) et permettent d'accéder à une infrastructure de réseau spécifique.

4. Appareil de communication (210a, 210b) selon la revendication 3,
dans lequel le circuit de commutation eSIM (211a, 211b) est conçu de manière à inscrire le nombre aléatoire (114) généré en tant que NIP dans le profil (221) de l'utilisateur (234) et à l'activer dans le profil (221).

5. Appareil de communication (210a, 210b) selon la revendication 3 ou 4,
dans lequel le circuit de commutation eSIM (211a, 211b) est conçu de manière à remplacer un NIP initial, déjà disponible dans le profil (221), par le nombre aléatoire (114) généré par le générateur de nombres aléatoires (112).

6. Appareil de communication (210b) selon l'une des revendications 3 à 5,
dans lequel le générateur de nombres aléatoires (112) est implémenté dans un programme applicatif (223) sur le profil (221) de l'utilisateur (234).

7. Appareil de communication (210a, 210b) selon l'une des revendications précédentes, dans lequel l'interface utilisateur (232) est conçue de manière à amener le programme applicatif (223), en réponse à une saisie prédéterminée, à générer le nombre aléatoire (114) et à le transmettre à l'écran (115).

8. Appareil de communication (210a, 210b) selon l'une des revendications précédentes,
dans lequel l'interface de communication (113) comprend une connexion matérielle conçue de manière à transmettre le nombre aléatoire (114) généré par le générateur de nombres aléatoires (112) à l'écran (115), sans passer par le processeur (231).

9. Appareil de communication (210a, 210b) selon l'une des revendications précédentes,
dans lequel l'interface de communication (113) comporte un circuit de commutation pour communication en champ proche (NFC) conçu de manière à transmettre le nombre aléatoire (114) généré par le générateur de nombres aléatoires (112) à l'écran (115), sans passer par le processeur (231).

10. Appareil de communication (210a, 210b) selon l'une des revendications précédentes,
dans lequel le processeur (231) est conçu de manière à établir un canal de communication (615) via un réseau (400, 500, 600) de la cinquième génération (5G) ou d'une autre génération, en réponse au déverrouillage du programme applicatif de communication.

11. Appareil de communication (210a, 210b) selon la revendication 10,
dans lequel le processeur (231) est conçu de manière à configurer une tranche (510b, 601) du réseau (400, 500, 600) de la cinquième génération ou d'une autre génération, en réponse au déverrouillage du programme applicatif de communication.

12. Appareil de communication (210a, 210b) selon la revendication 10 ou 11,
dans lequel le processeur (231) est conçu de manière à déverrouiller une application (611, 621) du réseau (400, 500, 600) de la cinquième génération ou d'une autre génération, en réponse au déverrouillage du programme applicatif de communication.

13. Procédé (700) pour fournir un numéro d'identification personnel (NIP) pour le déverrouillage d'une carte SIM électronique (eSIM) d'un appareil de communication, fournie par un circuit de commutation eSIM de l'appareil de communication, comprenant les étapes suivantes consistant :
à transmettre (702) un nombre aléatoire à un écran de l'appareil de communication ; et
à afficher (703) le nombre aléatoire transmis à l'écran,
à enregistrer une saisie d'un NIP au moyen d'une interface utilisateur de l'appareil de communication,
à comparer le NIP saisi avec le nombre aléatoire et, en cas de concordance, à déverrouiller une liaison de communication via un réseau de communication au moyen d'un processeur de l'appareil de communication,
**caractérisé par**
la génération (701) du nombre aléatoire par le circuit de commutation eSIM de l'appareil de communication, le nombre aléatoire généré étant un numéro d'identification personnel (NIP) destiné à déverrouiller la carte SIM électronique et généré par un générateur de nombres aléatoires du circuit de commutation eSIM,
le stockage du nombre aléatoire généré par le générateur de nombres aléatoires, sans passer par le processeur, dans une zone cryptée du circuit de commutation eSIM, au moyen d'une connexion matérielle du circuit de commutation eSIM.
